# EUROPÄISCHE PATENTSCHRIFT

(11) **EP 3 426 966 B1**
(45) Veröffentlichungstag und Bekanntmachung des Hinweises auf die Patenterteilung: **10.01.2024**
(21) Anmeldenummer: 17703691.0
(22) Anmeldetag: 31.01.2017
(51) Int. Cl.: F17C 1/06

(54) **POLKAPPENVERSTÄRKTER DRUCKBEHÄLTER**
POLAR CAP-REINFORCED PRESSURE VESSEL
CUVE SOUS PRESSION À CALOTTES RENFORCÉES

(30) Priorität: 12.02.2016 DE 202016100754 U
(43) Veröffentlichungstag der Anmeldung: 16.01.2019
(73) Patentinhaber: NPROXX B.V., 6422 RK Heerlen (NL)
(72) Erfinder: BÄUMER, Thomas, 41836 Hückelhoven (DE); MIDDENDORF, Christian, 52072 Aachen (DE)
(74) Vertreter: FARAGO Patentanwälte GmbH
(86) Internationale Anmeldenummer: PCT/EP2017/052017
(87) Internationale Veröffentlichungsnummer: WO 2017/137278

(56) Entgegenhaltungen:
- EP-A1- 1 989 477
- WO-A1-2014/139531
- US-A- 2 744 043
- US-A- 3 260 398
- US-A- 3 815 773
- US-A1- 2009 314 785

## Beschreibung

### Gebiet der Erfindung

Die Erfindung betrifft einen Druckbehälter mit verstärkten Polkappen und ein Verfahren zur Herstellung eines solchen Druckbehälters.

### Hintergrund der Erfindung

Der Markt für faserverstärkte Druckbehälter aus Faserverbundmaterial wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte Druckbehälter besitzen einen zylindrischen Mittelteil, auf dem sich beidseitig Polkappen zum Verschluss des Mittelteils befinden und werden beispielsweise mit einem Faser-Wickelverfahren hergestellt. Dabei wird ein Liner (Innenbehälter für den Druckbehälter) verwendet, der einerseits als Wickelkern fungiert und andererseits auch die Dichtigkeit des Behälters garantiert. Dieser Liner wird dann zur Herstellung des Druckbehälters zur Verstärkung mit Faserverbundmaterial überwickelt, damit der daraus resultierende Druckbehälter seine Stabilität erhält. Bei den Druckbehältern Type 3 wird ein metallischer Liner aus Aluminium oder Stahl eingesetzt, bei Type 4 Druckbehälter ist es ein Liner aus Kunststoff.

Konkurrierend zum Wickelverfahren gibt es das sogenannte Overbraiding-Verfahren, bei dem trockene oder vorimprägnierte Fasern (meist Kohlenstofffaser) auf den Liner aufgeflochten werden. Dabei wird der Liner so oft vor und zurück beflochten, bis die notwendige Faserverstärkung entstanden ist. Bei den beiden beschriebenen Herstellverfahren unterscheidet sich der Laminataufbau deutlich.

Bei dem Overbraiding-Verfahren sind die Variationsmöglichkeiten in Bezug auf den Faserwinkel deutlich begrenzter, weil die Anzahl der Flechtklöppel und die Dicke der verwendeten Faser einen bestimmten Faserwinkel ergeben, der nur in kleinen Grenzen variiert werden kann. Die Nachteile des Overbraiding-Verfahrens sind Faserondulation und unterschiedlicher Laminatqualität je nach Faserablagerichtung, insbesondere der Unterschied, ob von kleinem Durchmesser zum großen Durchmesser geflochten wird oder umgekehrt. Faserondulation bezeichnet dabei die Umlenkung von Fasern innerhalb von Geweben, beispielsweise bei Faserverbundwerkstoffen, wo Faserbündel verwoben und durch einen Kettfaden zusammengehalten werden. Hier kann es zu einer Abweichung der Faserbündel kommen, die durch die Kettfäden verursacht wird, was zu einer Abnahme der faserparallelen Festigkeit des Gewebes führt. Beim Wickelverfahren wird unterschieden in Umfangswicklung und Axialwicklung.

Die Umfangswicklungen haben einen Faserablagewickel von 80-90° zu Behälterachse, die Axiallagen einen Winkel von 10-70° zur Achse. Theoretisch können im zylindrischen Teil des Druckbehälters alle Wickel zwischen 0 und 90° realisiert werden, was aber praktisch keinen Sinn macht, weil die Spannungsverhältnisse einen speziellen Laminataufbau vorgeben. Beim Laminataufbau des gewickelten Druckbehälters zeigt sich die Schwäche, dass im Polkappenbereich die Verstärkung in Umfangsrichtung nicht möglich ist, weil der im Umfangsrichtung gewickelte Faden abrutscht und erst an der Linereinspannung zum Halten kommt. Diese fehlende Umfangsverstärkung muss durch entsprechende Axialwicklungen kompensiert werden, weil der Behälter sonst im Polkappenbereich frühzeitig versagt. Nachteilig ist dabei, dass die notwendigen Axialwicklungen zum Teil nur für den Polkappenbereich notwendig sind und im zylindrischen Bereich des Druckbehälters überflüssig sind. Besonders bei langen Behältern wird dadurch unnötig viel Faser verarbeitet, was die Kosten und das Gewicht des Behälters nach oben treibt.

Es wäre daher wünschenswert, wenn Druckbehälter zur Verfügung stehen würden, die mit wenig Materialaufwand zu fertigen sind und ein möglichst geringes Gewicht besitzen.

US 2 744 043 A offenbart ein Verfahren zur Herstellung eines Druckbehälters.

### Zusammenfassung der Erfindung

Es ist daher eine Aufgabe der Erfindung, einen Druckbehälter zur Verfügung zu stellen, der bei gleichen Festigkeitseigenschaften kostengünstiger hergestellt werden kann.

Diese Aufgabe wird gelöst durch einen Druckbehälter gemäß Anspruch 1.

Die zylinderförmigen Druckbehälter umfassen einen zylindrischen Teil, hier als Mittelteil bezeichnet, der eine kreisrunde Querschnittsfläche senkrecht zur Zylinderachse besitzt. Damit Gas unter Druck in diesem Druckbehälter gespeichert werden kann, sind die Zylinderflächen des Mittelteils mit kuppelförmigen Deckelflächen verschlossen. Diese Geometriebetrachtungen gelten gleichermaßen für Druckbehälter aus einem Innenbehälter und einer über den Innenbehälter gewickelten Außenschicht zur Verstärkung des Innenbehälters, beispielsweise mit einem Innenbehälter aus Kunststoff. Solche Behälter besitzen einerseits ein sehr geringes Gewicht, was beispielsweise für Anwendungen in Transportmitteln wichtig ist, und andererseits können Gase wie beispielsweise Wasserstoff unter hohem Druck verlustarm gespeichert werden, da Kunststoff eine sehr geringe Wasserstoffpermeabilität besitzt und die benötigte Festigkeit durch die Außenschicht aus Faserverbundmaterial bereitgestellt wird. Der erfindungsgemäße Druckbehälter umfasst somit einen Innenbehälter mit kuppelartigen Deckelflächen vorzugsweise mit einer von einer Halbkugel abweichenden Form, die im Deckel-Randbereich angrenzend an den zylindrischen Mittelteil des Innenbehälters eine stärkere Krümmung gegenüber einer Halbkugeloberfläche aufweist, während der Zentralbereich der Deckelfläche eine geringere Krümmung gegenüber einer Halbkugeloberfläche aufweist. Eine solche besonders geeignete kuppelförmige Deckelfläche wird auch als Isotensoid bezeichnet. Ein Isotensoid bezeichnet dabei eine Form, die in einer darauf gewickelten Außenschicht aus einem Faserverbundmaterial eine konstante Spannung in den Fasern in allen Punkten des Faserverlaufs bewirkt. Der Begriff "überdecken" bezeichnet das Aufbringen der Polkappenverstärkungsschicht und der Druckbehälterverstärkungsschicht jeweils von außen auf den Innenbehälter.

Hierbei besteht das Faserverbundmaterial im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt und oder geflochten werden, wobei die Faser(n) in Kontakt zueinander eng nebeneinander gewickelt und/oder miteinander verflochten werden. Dadurch entsteht eine Faserschicht, auf die die Fasern in weiteren Faserschichten gewickelt und/oder geflochten werden, bis das Faserverbundmaterial die gewünschte Dicke besitzt und eine entsprechende Außenschicht mit dieser Dicke darstellt. In einer Ausführungsform umfassen die Außenschicht erste und weitere Fasern, beispielsweise zweite Fasern, in mehrere Faserschichten. Durch den Verbund erhält das Faserverbundmaterial höherwertige Eigenschaften, wie beispielsweise eine hohe Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Dadurch, dass nur die Polkappen eine Polkappenverstärkungsschicht umfassen, die sich aber nicht über den Mittelteil erstreckt und die Festigkeit des Druckbehälters im Mitteilteil allein durch die Druckbehälterverstärkungsschicht erreicht werden kann, der durch auf eine auf die Geometrie des zylindrischen Mittelteil optimierte Faserverbundschicht (Faserlagen in Umfangsrichtung und in Axialrichtung im Verhältnis 2:1) gebildet wird, vermeidet man das Umwickeln des Mittelteils mit einer für die Geometrie der Polkappen optimierte Faserverbundschicht (zusätzlich axial ausgerichtete Faserlagen).

Der erfindungsgemäße Druckbehälter benötigt somit weniger Faserverbundmaterial zur Herstellung der Außenschicht als Umwicklung des Innenbehälters, um dennoch die gleiche Festigkeit wie andere Druckbehälter aufzuweisen. Der erfindungsgemäße Druckbehälter kann somit bei gleichen Festigkeitseigenschaften kostengünstiger hergestellt werden.

Diese Vorteile können beispielsweise mittels Wickeltechnik und mittels Verwendung einer sogenannten Vorform erreicht werden, die über die Polkappen gestülpt wird.

Hierbei ist eine konturstabile Vorform als Polkappenverstärkungsschicht auf mindestens einer der Polkappen, vorzugsweise auf beiden Polkappen, angeordnet. Die Vorform stellt einen textilen Faservorformling dar, der vor oder während des Wickelns der Druckbehälterverstärkungsschicht auf die Polkappen aufgebracht wird und diese in Umfangsrichtung verstärkt. Die Vorform kann dabei mittels Flechtverfahren oder mittels eines sogenannten "Fiber-Placement-Verfahrens" hergestellt und auf die Polkappe aufgebracht werden. Der Ausdruck "konturstabil" bezeichnet hierbei, dass die Vorform soviel Eigensteifigkeit aufweist, dass sie beim späteren Überwickeln nicht verschoben oder gestaucht wird.

Erfindungsgemäß ist die konturstabile Vorform eine aus Fasermaterial geflochtene konturstabile Vorform mit einem Flechtwinkel des Fasermaterials am Polkappenrand mindestens 140°, vorzugsweise mindestens 150°, besonders bevorzugt mindestens 160°. Als Flechtwinkel wird hier der Winkel zwischen den sich kreuzenden Fasern bezeichnet, dessen Winkelhalbierende im Wesentlichen parallel zur Zylinderachse des zylindrischen Mittelteils ausgerichtet ist. Der Begriff "im Wesentlichen" bezeichnet maximale Abweichungen von ±5° zum angegebenen Wert. Der Begriff "Geflecht" (eine geflochtene Vorform ist eine Vorform aus sich mit einem Flechtwinkel kreuzende Fasern oder Fasergeflecht) bezeichnet dabei das Produkt aus dem Ineinanderschlingen von mindestens zwei Fasern aus biegsamen Material zur Bildung einer Lage aus Geflecht. Die Vorform als Gesamtgeflecht kann aber auch mehrere solcher Lagen an Geflecht umfassen. Ein Geflecht kann damit nicht aus einem einzigen Faden alleine hergestellt werden und bildet somit das Gegenteil zum einem gewickelten Körper. In einer Lage aus Geflecht kreuzen sich die Fasern (oder Fäden) unter einem Flechtwinkel, wobei nebeneinander verlaufende Faser (Fäden) die sich kreuzenden Fasern (Fäden) abwechseln unterlaufen und überlaufen und der jeweils benachbarte Faden das Unter- und Überlaufen gegengleich ausführt. Das Geflecht aus Fasermaterial kann dabei unterschiedlich eng hergestellt sein, so dass sich zwischen den einzelnen Fasern ein in Anzahl und Größe variierendes Volumen befindet kann, das beispielsweise später durch Matrixmaterial ausgefüllt werden kann. In einer Ausführungsform umfasst das Geflecht mehrere Lagen aus sich in einem Flechtwinkel kreuzenden Fasern.

In einer Ausführungsform sind in die geflochtene Vorform ein oder mehrere Verstärkungsfäden mit einer Ausrichtung im Wesentlichen parallel zur Zylinderachse des zylindrischen Mittelteils eingeflochten. Die Verstärkungsfäden sind vorteilhaft für die Biegebelastbarkeit im Polkappenbereich. Beim Flechten der Vorform können leicht sogenannte 0°-Stehfäden als Verstärkungsfäden mit eingezogen werden, wobei der 0°-Winkel einer Ausrichtung parallel zur Zylinderachse entspricht. Der Begriff "im Wesentlichen" bezeichnet maximale Abweichungen von ±5° zum angegebenen Wert. Wählt man eine Flechtmaschinenanordnung, die einen Flechtwinkel im Randbereich der Polkappe von ca. 160° ergibt, so erzeugt man mit den 0°-Stehfäden ein annähernd optimales Faserverbundmaterial im Verhältnis 2:1 (radial: axial), was der Beanspruchung gemäß der Kesselformel entspricht. Im Polkappenbereich in Richtung der Polkappenmitte verändert sich der Flechtwinkel entsprechend der Entfernung relativ zur Zylinderachse, was aber bei abnehmender Spannung problemlos ist. Die so aufgebaute Polkappenverstärkungsschicht vermeidet Faserondulation und unterschiedlicher Laminatqualität je nach Faserablagerichtung (Unterschied, ob von kleinem Durchmesser zum großen Durchmesser geflochten wird oder umgekehrt). Als Verstärkungsfäden können beispielsweise Kohlenstofffäden verwendet werden.

In einer Ausführungsform besteht die konturstabile Vorform aus Fasermaterial aufgestickt auf ein drapierfähiges Trägermaterial, vorzugsweise ist das Trägermaterial ein Vlies. Der Begriff "drapierfähig" bezeichnet die Fähigkeit, sich an eine räumliche Form anzupassen. Durch das Aufsticken wird das Fasermaterial in seiner gewünschten Ausrichtung fixiert. In einer Ausführungsform ist das Fasermaterial spiralförmig auf das Trägermaterial aufgestickt.

In einer weiteren Ausführungsform sind ein oder mehrere Verstärkungsfäden mit einer Ausrichtung im Wesentlichen parallel zur Zylinderachse des zylindrischen Mittelteils mit auf das Trägermaterial aufgestickt. Für diese Verstärkungsfäden gilt das gleiche wie bereits voranstehend für die Verstärkungsfäden in der geflochtenen Vorform beschrieben. Beispielsweise werden die Verstärkungsfäden ebenfalls aufgestickt und Verstärken die Polkappe in axialer Richtung (parallel zur Zylinderachse).

In einer weiteren Ausführungsform ist das Trägermaterial mit einer adhäsiven Schicht direkt auf der Polkappe befestigt. Die adhäsive Schicht, beispielsweise eine Schicht aus Epoxydharz als Sprühschicht auf die Trägerschicht aufgebracht, klebt die Trägerschicht mit aufgesticktem Fasermaterial fest nach dem Aufschieben auf die Polkappe auf die Polkappe auf und verhindert so ein Verrutschen während der nachfolgenden Herstellungsschritte.

In einer weitern Ausführungsform wird die Vorform über zumindest einen Teil des über die Polkappe gewickelte noch nassen Faserverbundmaterials der Druckbehälterverstärkungsschicht geschoben und durch das Matrixmaterial der Druckbehälterverstärkungsschicht im Bereich der Polkappe fixiert. Der Begriff "nass" bezeichnet ein noch nicht ausgehärtetes Faserverbundmaterials, wo das Matrixmaterial noch mit dem von außen aufgebrachten Matetrial vernetzen kann.

Hierbei muss sich genügend Matrixmaterial, beispielsweise Harz, auf der Druckbehälterverstärkungsschicht befinden, damit die an sich trockene Vorform mit ausreichend Matrixmaterial für die Konturstabilität und Vernetzung der Vorform durchtränkt werden kann. Vorzugsweise ist die Vorform bereits selber mit einem duroplastischen Matrixmaterial imprägniert beziehungsweise getränkt. In dieser Ausführungsform wird die Polkappenverstärkungsschicht in die Druckbehälterverstärkungsschicht als gemeinsamer Verbund eingearbeitet.

In einer weiteren Ausführungsform überdeckt die Druckbehälterverstärkungsschicht die Polkappenverstärkungsschicht und die Vorform ist zur Herstellung der Konturstabilität auf der Polkappe fixiert. Dadurch kann eine zusätzlich aufzubringende adhäsive Schicht in der Vorform vermieden werden. In einer Ausführungsform ist die Vorform mit einer thermoplastischen Matrix hergestellt und ist mit der Polkappe aus einem Plastikmaterial (beispielsweise aus einem thermoplastischen Material) zumindest punktuell verschweißt. Ein thermoplastisches Matrixmaterial ermöglicht das Verschweißen mit Plastikmaterial.

In einer weiteren Ausführungsform ist die Vorform eine gehärtete Vorform, wobei eine Innenkontur der Vorform auf die Polkappe angepasst und eine Außenkontur der Vorform so gestaltet ist, dass die Druckbehälterverstärkungsschicht darauf abgelegt werden kann, wobei die Außenkontur dabei so ausgeführt ist, dass sie im Randbereich der Polkappe eine Verlängerung des Mittelteils des Innenbehälters darstellt, wobei die Druckbehälterverstärkungsschicht des Weiteren eine radial gewickelte innere Lage umfasst, die als durchgehende Lage auf das Mittelteil und direkt auf die Außenkontur im Randbereich zum darauffolgenden Überwickeln mit weiteren äußeren Lagen der Druckbehälterverstärkungsschicht gewickelt ist, vorzugsweise umfasst die Vorform eine Anschlagnase als Begrenzung des mit der Druckbehälterverstärkungsschicht überwickelten Außenkontur im Randbereich der Polkappe . Als radiale Wicklungen werden Faserverläufe mit einer Faserrichtung im Faserverbundmaterial von nahe 90° relativ zur Zylinderachse des Mittelteils des Druckbehälters als den Faserwinkel in der Druckbehälterverstärkungsschicht bezeichnet.

Die erfindungsgemäßen Druckbehälter können beispielsweise als CNG-Druckbehälter, Wasserstoffdruckbehälter, Atemluftflaschen und andere Druckbehälter verwendet werden.

Der erfindungsgemäße Druckbehälter wird durch das Verfahren gemäß Anspruch 9 hergestellt.

Hierbei wird eine konturstabile Vorform als Polkappenverstärkungsschicht auf mindestens einer der Polkappen, vorzugsweise auf beiden Polkappen, angeordnet. Die Vorform stellt einen textilen Faservorformling dar, der vor oder während des Wickelns der Druckbehälterverstärkungsschicht auf die Polkappen aufgebracht wird und diese in Umfangsrichtung verstärkt. Die Vorform kann dabei mittels Flechtverfahren oder mittels eines sogenannten "Fiber-Placement-Verfahrens" hergestellt und auf die Polkappe aufgebracht werden.

Erfindungsgemäß wird eine konturstabile Vorform als Polkappenverstärkungsschicht aus einem Fasermaterial F1 geflochten, wobei der Flechtwinkel FLW der Vorform am Polkappenrand mindestens 140°, vorzugsweise mindestens 150°, besonders bevorzugt mindestens 160°, beträgt. In einem zusätzlichen Schritt können dabei ein oder mehrere Verstärkungsfäden mit einer Ausrichtung im Wesentlichen parallel zur Zylinderachse des zylindrischen Mittelteils eingeflochten werden.

In einer Ausführungsform kann für die Herstellung der konturstabilen Vorform Fasermaterial auf ein drapierfähiges Trägermaterial, vorzugsweise ein Vlies, aufgestickt werden (ein sogenanntes Tailored fibre placement TFP). Hierbei kann das Fasermaterial spiralförmig auf das Trägermaterial aufgestickt werden. Weiterhin können ein oder mehrere Verstärkungsfäden mit einer Ausrichtung im Wesentlichen parallel zur Zylinderachse des zylindrischen Mittelteils mit auf das Trägermaterial aufgestickt werden. Das TFP-Verfahren bietet auch die Möglichkeit verschiedene Fasern wie Kohlenstofffasern, Glasfasern oder Kevlarfasern so miteinander zu kombinieren, dass beispielsweise die Energieaufnahme im Polkappenbereich, wie sie z.B. bei Aufprall des Behälters auf eine feste Oberfläche erforderlich wird, erhöht wird. Das Trägermaterial kann mit einer adhäsiven Schicht direkt auf der Polkappe befestigt werden. Alternativ zum Aufkleben kann die Vorform auch über zumindest einen Teil des über die Polkappe gewickelte noch nassen Faserverbundmaterials der Druckbehälterverstärkungsschicht geschoben und durch das Matrixmaterial der Druckbehälterverstärkungsschicht im Bereich der Polkappe fixiert werden. Alternativ dazu kann die Druckbehälterverstärkungsschicht überdeckend auf die Polkappenverstärkungsschicht aufgebracht werden, wobei die Vorform vorher zur Herstellung der Konturstabilität auf der Polkappe fixiert wird. Hierzu kann die Vorform mit einer thermoplastischen Matrix hergestellt und mit der Polkappe aus einem Plastikmaterial zumindest punktuell verschweißt werden.

Alternativ kann die TFP- oder Flecht-Vorform in einem nachgeschalteten Prozess, beispielsweise durch ein sogenanntes Resin-Transfer-Molding (RTM), in einer Form mit einem duroplastischen Harz imprägniert und gehärtet werden, bevor die so hergestellte Polkappenverstärkungsschicht auf den Polkappenbereich des Liners (Innenbehälter für den Druckbehälter) aufgebracht wird. Die Form ist dabei so gestaltet, dass die Innenkontur der Polkappenverstärkungsschicht der der Polkappe des Liners (Innenbehälter für den Druckbehälter) entspricht und die Außenkontur eine für die belastungsgerechte Ablage der Axialwicklungen geeignete Oberfläche darstellt.

In einer weiteren Ausführungsform kann die Außenkontur der Polkappenverstärkungsschicht so ausgeführt sein, dass in ihr zunächst der zylindrische Bereich des Mittelteils des Druckbehälters in einem Randbereich der Polkappe als verlängerter Bereich fortgeführt wird und somit eine in den Polkappenbereich hineingezogene Ablage der inneren Lagen der Druckbehälterverstärkungsschicht in Form von radiale Wicklungen ermöglicht wird.

In einer weiteren Ausführungsform kann diese Vorform formschlüssig mit dem Druckanschluss verbunden werden. Hierdurch lässt sich zusammen mit der Druckbehälterverstärkungsschicht, die darüber gewickelt wird und nach dem Aushärten eine Verbindung mit der Vorform eingeht, ein hohes Drehmoment vom Druckanschluss in das Laminat einleiten, ohne die Verbindung von Druckanschluss zu Innenbehälter zu belasten.

### Kurze Beschreibung der Abbildungen

Diese und andere Aspekte der Erfindung werden im Detail in den Abbildungen wie folgt gezeigt.
- Fig.1:: eine Ausführungsform eines erfindungsgemäßen Druckbehälters im seitlichen Schnitt;
- Fig.2:: eine Ausführungsform eines erfindungsgemäßen Druckbehälters im Bereich der Polkappe im seitlichen Schnitt mit einer Vorform aus geflochtenem Faserverbundmaterial;
- Fig.3:: eine Ausführungsform eines erfindungsgemäßen Druckbehälters im Bereich der Polkappe mit einer Vorform aus Fasermaterial aufgestickt auf ein Trägermaterial (a) in Draufsicht auf die Polkappe und (b) im seitlichen Schnitt durch die Vorform;
- Fig.4:: eine Ausführungsform eines erfindungsgemäßen Druckbehälters im Bereich der Polkappe im seitlichen Schnitt mit einer Vorform aus Fasermaterial aufgestickt auf ein Trägermaterial, die auf die Polkappe drappiert ist;
- Fig.5:: eine Ausführungsform eine Ausführungsform eines erfindungsgemäßen Druckbehälters im Bereich der Polkappe im seitlichen Schnitt mit einer Vorform;
- Fig.6:: eine Ausführungsform eine erfindungsgemäßen Verfahrens zur Herstellung des erfindungsgemäßen Druckbehälters, und
- Fig.7:: eine weitere Ausführungsform eine erfindungsgemäßen Verfahrens zur Herstellung des erfindungsgemäßen Druckbehälters.

### Detaillierte Beschreibung der Ausführungsbeispiele

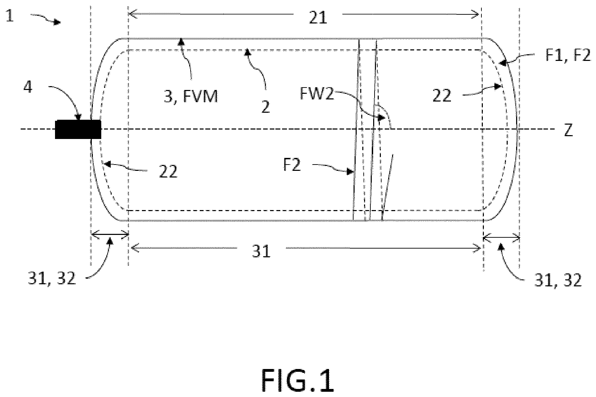

Fig.1 zeigt eine Ausführungsform eines erfindungsgemäßen Druckbehälters 1 im seitlichen Schnitt. Der Druckbehälter 1 umfasst einen Innenbehälter 2 aus einem zylinderförmigen Mittelteil 21 und zwei das Mittelteil 21 jeweils auf beiden Seiten verschließende kuppelförmige Polkappen 22 und eine auf den Innenbehälter 2 gewickelte Außenschicht 3 zur Verstärkung des Innenbehälters 2 gegen eine Druckbelastung, wobei die Außenschicht 3 mindestens eine Polkappenverstärkungsschicht 31 und eine Druckbehälterverstärkungsschicht 32 aus Faserverbundmaterial FVM umfasst, wobei die Polkappenverstärkungsschicht 31 die Polkappen 22 zumindest teilweise überdeckt und die Druckbehälterverstärkungsschicht 32 die Polkappen 22 und das Mittelteil 21 überdeckt. Der Faserwinkel FW2 ist dabei ein Winkel von nahezu 90° zur Zylinderachse Z des Mittelteils, vorzugsweise beträgt FW2 mehr als 80°.

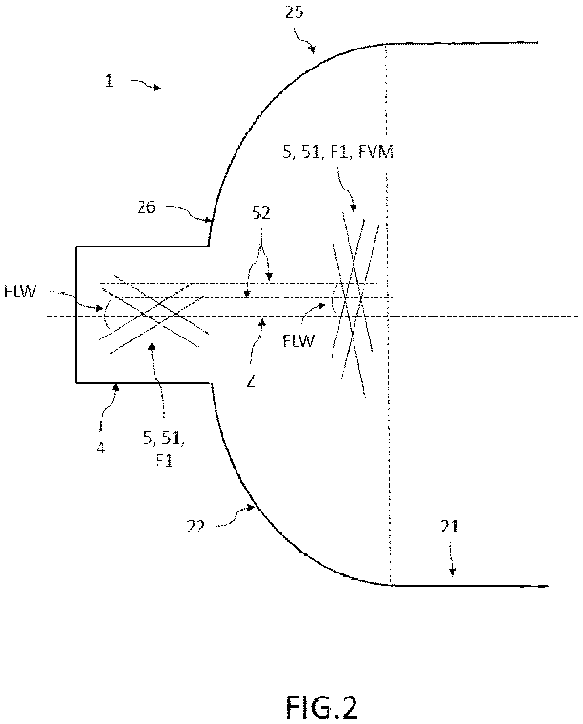

Fig.2 zeigt eine Ausführungsform eines erfindungsgemäßen Druckbehälters 1 im Bereich der Polkappe 22 im seitlichen Schnitt mit einer Vorform 5 aus geflochtenem Faserverbundmaterial FVM. Diese konturstabile Vorform 5 ist als Polkappenverstärkungsschicht 31 auf mindestens einer der Polkappen 22, vorzugsweise auf beiden Polkappen 22, angeordnet. Hierbei ist die Vorform 5 als eine aus Fasermaterial F1 geflochtene konturstabile Vorform 51 mit einem Flechtwinkel FLW des Fasermaterials F1 am Polkappenrand 25 mindestens 140°, vorzugsweise mindestens 150°, besonders bevorzugt mindestens 160°, ausgeführt. Zur Polkappenmitte 26 hin verringert sich der Flechtwinkel FLW deutlich. In dieser Ausführungsform sind in die geflochtene Vorform 51 mehrere Verstärkungsfäden 52 mit einer Ausrichtung im Wesentlichen parallel zur Zylinderachse Z des zylindrischen Mittelteils 21 eingeflochten, wobei aus Gründen der Übersichtlichkeit nur zwei Verstärkungsfäden dargestellt sind. Gleiches gilt für die sich kreuzenden Fasern, wo ebenfalls nur wenige Fasern stellvertretenden für die übrigen Fasern dargestellt sind.

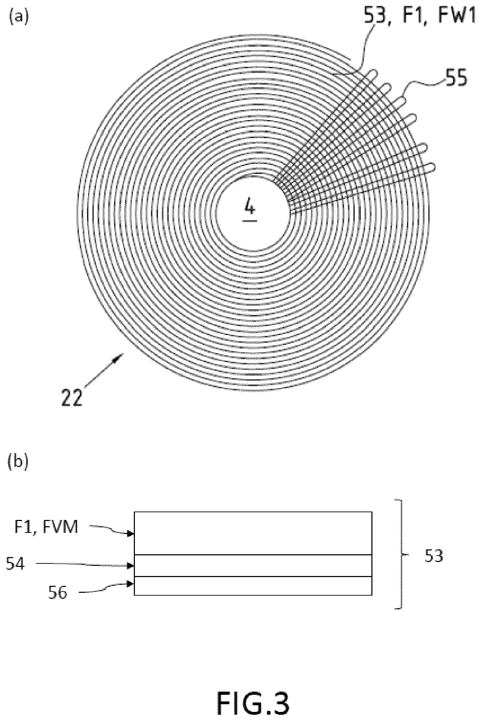

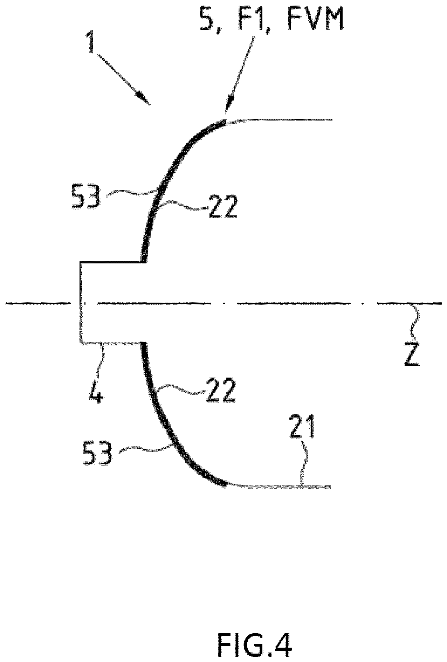

Fig.3 zeigt eine Ausführungsform eines erfindungsgemäßen Druckbehälters 1 im Bereich der Polkappe 22 mit einer Vorform 53 aus Fasermaterial F1 aufgestickt auf ein Trägermaterial 54 (a) in Draufsicht auf die Polkappe und (b) im seitlichen Schnitt durch die Vorform. Die gezeigte Vorform 53 ist als Polkappenverstärkungsschicht 31 auf mindestens einer der Polkappen 22, vorzugsweise auf beiden Polkappen 22, angeordnet. Hierbei kann das das Fasermaterial F1 spiralförmig auf das Trägermaterial 54 aufgestickt sein. In dieser Ausführungsform sind mehrere Verstärkungsfäden 55 mit einer Ausrichtung im Wesentlichen parallel zur Zylinderachse Z des zylindrischen Mittelteils 21 mit auf das Trägermaterial 54 aufgestickt. Wie in Fig.4b gezeigt, umfasst die Vorform 53 neben dem Faserverbundmaterial F1, FVM und der Trägerschicht 54 eine adhäsive Schicht 56. Das Trägermaterial 54 wird dabei mit der adhäsiven Schicht 56 direkt auf der Polkappe befestigt. Hierbei können die Verstärkungsfäden 55 nachrutschen und ermöglichen so die Umformung auf die Polkappenkontur.

Fig.4 zeigt eine Ausführungsform eines erfindungsgemäßen Druckbehälters 1 im Bereich der Polkappe 22 im seitlichen Schnitt mit einer Vorform 53 aus Fasermaterial FVM aufgestickt auf ein Trägermaterial 54, die auf die Polkappe 22 drappiert ist.

Die Polkappenverstärkungsschichten 5, 51 und 53 aus den Figuren 2 - 4 können zumindest einen Teil des über die Polkappe 22 gewickelte noch nassen Faserverbundmaterials F2 der Druckbehälterverstärkungsschicht 32 geschoben und durch das Matrixmaterial der Druckbehälterverstärkungsschicht 32 im Bereich der Polkappe 22 fixiert werden. Hierzu umfassen die Polkappenverstärkungsschichten 5, 51 und 53 als Matrixmaterial ein duroplastisches Material, damit eine gute Vernetzung mit der Druckbehälterverstärkungsschicht 32 hergestellt werden kann.

Sofern die Polkappenverstärkungsschichten 5, 51 und 53 dagegen von der Druckbehälterverstärkungsschicht 32 überdeckt und die die Polkappenverstärkungsschichten 5, 51 und 53 zur Herstellung der Konturstabilität auf der Polkappe 22 fixiert werden sollen, umfassen die Polkappenverstärkungsschichten 5, 51 und 53 als Matrixmaterial ein thermoplastisches Material, damit eine gute Verschweißung mit der Polkappe 22 vorzugsweise selbst aus einem thermoplastischen Material hergestellt werden kann.

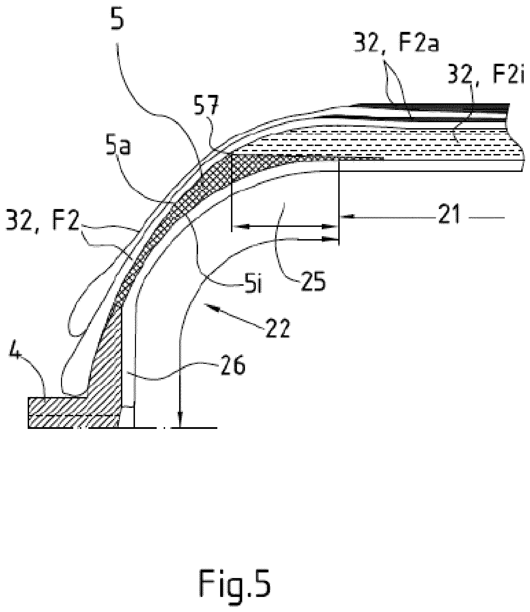

Fig.5 zeigt eine weitere Ausführungsform des Druckbehälters 1 mit der Vorform 5 als Einlegebauteil für die Polkappe 22. Die TFP- oder Flecht-Vorform 5 wurde in einem nachgeschalteten Prozess, beispielsweise durch ein sogenanntes Resin-Transfer-Molding (RTM), in einer Form mit einem duroplastischen Harz imprägniert und gehärtet, bevor diese als Polkappenverstärkungsschicht 31 auf den Polkappenbereich 22 des Innenbehälter 2 aufgebracht wird. Die Form der so bereitgestellten Polkappenverstärkungsschicht 31 ist dabei so gestaltet, dass die Innenkontur 5i der Vorform 5 der der Polkappe 22 entspricht und die Außenkontur 5a eine für die belastungsgerechte Ablage der axialen Faserwicklungen F2 der Druckbehälterverstärkungsschicht 32 geeignete Oberfläche darstellt. Hierbei kann die Außenkontur 5a so ausgeführt sein, dass in ihr zunächst der Mitteilteil 21 des Innenbehälters 2 in einem Randbereich 25 der Polkappe 22 als verlängerter Bereich fortgeführt wird und somit eine in den Polkappenbereich hineingezogene Ablage der inneren Lagen F2i als radiale Wicklungen der Druckbehälterverstärkungsschicht 32 (Wicklung in Umfangsrichtung) bis zur Anschlagnase 57 ermöglicht wird. Hierbei kann diese Vorform 5 formschlüssig mit dem Druckanschluss 4 verbunden werden. Hierdurch lässt sich zusammen mit der Druckbehälterverstärkungsschicht 32, die darüber gewickelt wird und nach dem Aushärten eine Verbindung mit der Vorform 5 eingeht, ein hohes Drehmoment vom Druckanschluss 4 in das Laminat einleiten, ohne die Verbindung von Druckanschluss 4 zu Innenbehälter 2 zu belasten.

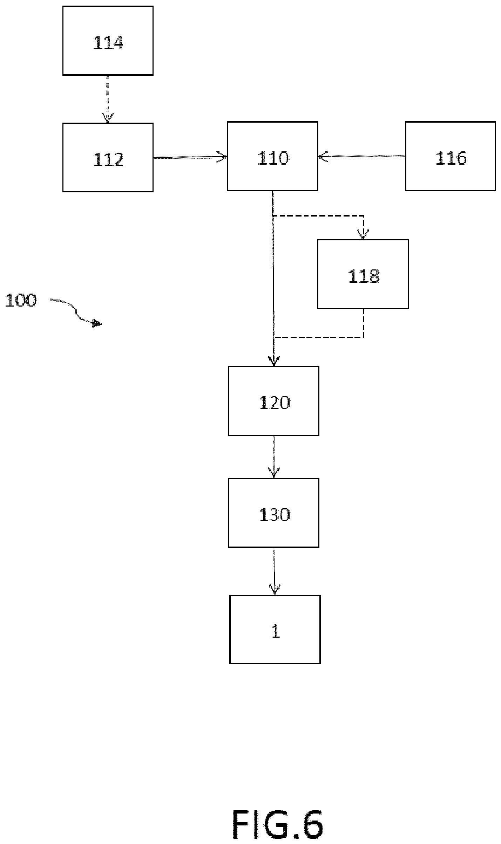

Fig.6 zeigt eine Ausführungsform eines erfindungsgemäßen Verfahrens 100 zur Herstellung des in Fig.1 gezeigten Druckbehälters umfassend die Schritte des Herstellens 110 einer konturstabilen Vorform 5, 51, 53 als die Polkappenverstärkungsschicht 31 für mindestens eine der Polkappen 22, vorzugsweise für beide Polkappen 22, mittels eines Flechtverfahrens 112 oder mittels Aufstickens 116 von Fasermaterial auf ein drapierfähiges Trägermaterial 54; des Aufbringens 120 der Polkappenverstärkungsschicht 31 auf die Polkappen 22, so dass die Polkappenverstärkungsschicht 31 die Polkappen 22 zumindest teilweise überdeckt; und des Aufbringens 130 der Druckbehälterverstärkungsschicht 32 auf die Polkappen 22 und das Mittelteil 21, wobei vorzugsweise die Druckbehälterverstärkungsschicht 32 von außen auf die Polkappenverstärkungsschicht 22 aufgebracht wird.

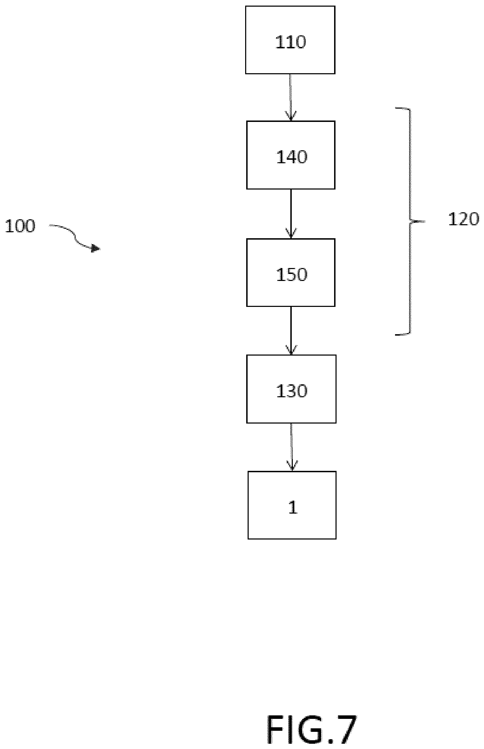

Fig.7 zeigt eine weitere Ausführungsform eines erfindungsgemäßen Verfahrens 100 zur Herstellung des in Fig.1 gezeigten Druckbehälters, die zum Herstellen 110 einer konturstabilen Vorform 5 und zum Aufbringen 120 der Polkappenverstärkungsschicht die Schritte des Aushärtens 140 der Vorform 5 mit einer Innenkontur 5i angepasst auf die Polkappe 22 und einer Außenkontur 5a, die so gestaltet ist, dass die Druckbehälterverstärkungsschicht 32 darauf abgelegt werden kann, wobei die Außenkontur 5a dabei so ausgeführt ist, dass sie im Randbereich 25 der Polkappe 22 eine Verlängerung des Mittelteils 21 des Innenbehälters 2 darstellt; sowie des Aufwickelns 150 einer inneren Lage F2i als radiale Wicklung der Druckbehälterverstärkungsschicht 32 auf das Mittelteil 21 und direkt auf die Außenkontur 5a im Randbereich 25, vorzugsweise bis zu einer Anschlagnase 57 der Vorform 5 als Begrenzung der mit der Druckbehälterverstärkungsschicht 22 zu überwickelnden Außenkontur 5a im Randbereich 25 der Polkappe 22; gefolgt von einem Aufwickeln 130 ein oder mehrerer äußerer Lagen F2a der Druckbehälterverstärkungsschicht 32 auf die gesamte Vorform 5.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst, sofern sie nicht vom Gegenstand der Ansprüche abweichen.

### LISTE DER BEZUGSZEICHEN

- 1: Druckbehälter
- 2: Innenbehälter
- 21: zylindrisches Mittelteil des Innenbehälters
- 22: kuppelförmige Polkappen des Innenbehälters
- 25: Randbereich der Polkappe bzw. verlängerter Bereich
- 26: Polkappenmitte
- 3: Außenschicht aus Faserverbundmaterial
- 31: Polkappenverstärkungsschicht der Außenschicht
- 32: Druckbehälterverstärkungsschicht der Außenschicht
- 4: Ventil / Druckanschluss
- 5: konturstabile Vorform als Polkappenverstärkungsschicht
- 5a: Außenkontur der Vorform
- 5i: Innenkontur der Vorform
- 51: aus Fasermaterial geflochtene konturstabile Vorform
- 52: Verstärkungsfäden für Geflecht
- 53: konturstabile Vorform aus Fasermaterial aufgestickt auf ein Trägermaterial
- 54: Trägermaterial
- 55: Verstärkungsfäden für Vorform
- 56: adhäsive Schicht
- 57: Anschlussnase für die Druckbehälterverstärkungsschicht
- 100: eines erfindungsgemäßen Druckbehälters
- 110: Herstellen einer konturstabilen Vorform
- 112: das Herstellen mittels eines Flechtverfahrens
- 114: zusätzlichen Einflechtens von einem oder mehreren Verstärkungsfäden
- 116: das Herstellen mittels Aufstickens
- 118: punktuelles Verschweißens der Vorform mit der Polkappe
- 120: Aufbringen der Polkappenverstärkungsschicht auf die Polkappen
- 130: Aufbringen der Druckbehälterverstärkungsschicht auf die Polkappen
- 140: Aushärten der Vorform mit einer auf die Polkappe angepassten Innenkontur
- 150: Aufwickeln einer inneren Lage der Druckbehälterverstärkungsschicht direkt auf die Außenkontur der Vorform im Randbereich
- F1: Faser beziehungsweise Fasermaterial der Polkappenverstärkungsschicht
- F2: Faser beziehungsweise Fasermaterial der Druckbehälterverstärkungsschicht
- F2i: innere Lagen der Druckbehälterverstärkungsschicht
- F2a: äußere Lagen der Druckbehälterverstärkungsschicht
- FW1: Faserwinkel in der Polkappenverstärkungsschicht
- FLW: Flechtwinkel in der Polkappenverstärkungsschicht
- FW2: Faserwinkel in der Druckbehälterverstärkungsschicht
- FVM: Faserverbundmaterial der Außenschicht, der Polkappenverstärkungsschicht und/oder der Druckbehälterverstärkungsschicht
- Z: Zylinderachse des zylindrischen Mittelteils

## Patentansprüche

1. Druckbehälter (1) umfassend einen Innenbehälter (2) aus einem zylinderförmigen Mittelteil (21) und zwei das Mittelteil (21) jeweils auf beiden Seiten verschließende kuppelförmige Polkappen (22) und eine auf den Innenbehälter (2) gewickelte Außenschicht (3) zur Verstärkung des Innenbehälters (2) gegen eine Druckbelastung, wobei die Außenschicht (3) mindestens eine Polkappenverstärkungsschicht (31) und eine Druckbehälterverstärkungsschicht (32) aus Faserverbundmaterial (FVM) umfasst, wobei die Polkappenverstärkungsschicht (31) die Polkappen (22) zumindest teilweise überdeckt und die Druckbehälterverstärkungsschicht (32) die Polkappen (22) und das Mittelteil (21) überdeckt und eine konturstabile Vorform (5, 51, 53) als die Polkappenverstärkungsschicht (31) auf mindestens einer der Polkappen (22), vorzugsweise auf beiden Polkappen (22), angeordnet ist,
**dadurch gekennzeichnet,**
**dass** die konturstabile Vorform (5, 51) eine aus Fasermaterial (F1) geflochtene konturstabile Vorform (51) mit einem Flechtwinkel (FLW) des Fasermaterials (F1) am Polkappenrand (25) von mindestens 140°, vorzugsweise mindestens 150°, besonders bevorzugt mindestens 160°, ist, wobei der Flechtwinkel (FLW) den Winkel zwischen den sich kreuzenden Fasern bezeichnet, dessen Winkelhalbierende im Wesentlichen parallel zur Zylinderachse des zylindrischen Mittelteils (21) ausgerichtet ist.

2. Druckbehälter (1) nach Anspruch 1,
**dadurch gekennzeichnet,**
**dass** in die geflochtene Vorform (51) ein oder mehrere Verstärkungsfäden (52) mit einer Ausrichtung im Wesentlichen parallel zur Zylinderachse (Z) des zylindrischen Mittelteils (21) eingeflochten sind.

3. Druckbehälter (1) nach Anspruch 1,
**dadurch gekennzeichnet,**
**dass** die konturstabile Vorform (5, 53) aus Fasermaterial (F1) aufgestickt auf ein drapierfähiges Trägermaterial (54) besteht, vorzugsweise ist das Fasermaterial (F1) spiralförmig auf das Trägermaterial (54) aufgestickt.

4. Druckbehälter (1) nach Anspruch 3, **dadurch gekennzeichnet,**
**dass** ein oder mehrere Verstärkungsfäden (55) mit einer Ausrichtung im Wesentlichen parallel zur Zylinderachse (Z) des zylindrischen Mittelteils (21) mit auf das Trägermaterial (54) aufgestickt sind.

5. Druckbehälter (1) nach einem der Ansprüche 3 oder 4
**dadurch gekennzeichnet,**
**dass** das Trägermaterial (54) mit einer adhäsiven Schicht (56) direkt auf der Polkappe befestigt ist.

6. Druckbehälter (1) nach einem der Ansprüche 1 bis 4,
**dadurch gekennzeichnet,**
**dass** die Vorform (5, 51, 53) über zumindest einen Teil des über die Polkappe (22) gewickelte noch nassen Faserverbundmaterials (F2) der Druckbehälterverstärkungsschicht (32) geschoben und durch das Matrixmaterial der Druckbehälterverstärkungsschicht (32) im Bereich der Polkappe (22) fixiert wird.

7. Druckbehälter (1) nach Anspruch 1 bis 5,
**dadurch gekennzeichnet,**
**dass** die Druckbehälterverstärkungsschicht (32) die Polkappenverstärkungsschicht (31) überdeckt und die Vorform (5, 51, 53) zur Herstellung der Konturstabilität auf der Polkappe (22) fixiert ist, vorzugsweise ist die Vorform (5, 51, 53) mit einer thermoplastischen Matrix hergestellt ist und mit der Polkappe (22) aus einem Plastikmaterial zumindest punktuell verschweißt.

8. Druckbehälter (1) nach einem der voranstehenden Ansprüche
**dadurch gekennzeichnet,**
**dass** die Vorform (5) eine gehärtete Vorform zur Auflage auf die Polkappe ist, wobei eine Innenkontur (5i) der Vorform (5) auf die Polkappe (22) angepasst und eine Außenkontur (5a) der Vorform (5) so gestaltet ist, dass die Druckbehälterverstärkungsschicht (32) darauf abgelegt werden kann, wobei die Außenkontur (5a) dabei so ausgeführt ist, dass sie im Randbereich (25) der Polkappe (22) eine Verlängerung des Mittelteils (21) des Innenbehälters (2) darstellt, wobei die Druckbehälterverstärkungsschicht (32) des Weiteren eine radial gewickelte innere Lage (F2i) umfasst, die als durchgehende Lage auf das Mittelteil (21) und direkt auf die Außenkontur (5a) im Randbereich (25) zum darauffolgenden Überwickeln der gesamten Vorform (5) mit ein oder mehreren äußeren Lagen (F2a) der Druckbehälterverstärkungsschicht (32) gewickelt ist, vorzugsweise umfasst die Vorform (5) eine Anschlagnase (57) als Begrenzung des mit der Druckbehälterverstärkungsschicht (22) überwickelten Außenkontur (5a) im Randbereich (25) der Polkappe (22).

9. Verfahren (100) zur Herstellung eines Druckbehälters (1) nach Anspruch 1 umfassend die Schritte
Herstellen (110) einer konturstabilen Vorform (5, 51, 53) als die Polkappenverstärkungsschicht (31) für mindestens eine der Polkappen (22), vorzugsweise für beide Polkappen (22), mittels eines Flechtverfahrens (112) oder mittels Aufstickens (116) von Fasermaterial auf ein drapierfähiges Trägermaterial (54);
Aufbringen (120) der Polkappenverstärkungsschicht (31) auf die Polkappen (22), so dass die Polkappenverstärkungsschicht (31) die Polkappen (22) zumindest teilweise überdeckt;
Aufbringen (130) der Druckbehälterverstärkungsschicht (32) auf die Polkappen (22) und das Mittelteil (21), wobei vorzugsweise die Druckbehälterverstärkungsschicht (32) von außen auf die Polkappenverstärkungsschicht (22) aufgebracht wird.

10. Verfahren nach Anspruch 9, wobei das Flechten den weiteren Schritt des zusätzlichen Einflechtens (114) von einem oder mehreren Verstärkungsfäden (52) mit einer Ausrichtung im Wesentlichen parallel zur Zylinderachse (Z) des zylindrischen Mittelteils (21) umfasst.

11. Verfahren nach Anspruch 10, wobei der Schritt des Herstellens (110) der konturstabilen Vorform (5, 53) mittels Aufsticken (116) ein spiralförmiges Aufsticken des Fasermaterials auf das Trägermaterial (54) umfasst, vorzugsweise werden ein oder mehrere Verstärkungsfäden (55) mit einer Ausrichtung im Wesentlichen parallel zur Zylinderachse (Z) des zylindrischen Mittelteils (21) mit auf das Trägermaterial (54) aufgestickt.

12. Verfahren nach einem der Ansprüche 9 bis 11, umfassend der zusätzlichen Schritt des zumindest punktuellen Verschweißens (118) der mit einer thermoplastischen Matrix hergestellten Vorform (5, 51, 53) mit der Polkappe (22) zur Fixierung der Vorform (5, 51, 53) auf der Polkappe (22).

13. Verfahren nach einem der Ansprüche 9 bis 12, umfassend die zusätzlichen Schritte
Aushärten (140) der Vorform (5) mit einer Innenkontur (5i) angepasst auf die Polkappe (22) und einer Außenkontur (5a), die so gestaltet ist, dass die Druckbehälterverstärkungsschicht (32) darauf abgelegt werden kann, wobei die Außenkontur (5a) dabei so ausgeführt ist, dass sie im Randbereich (25) der Polkappe (22) eine Verlängerung des Mittelteils (21) des Innenbehälters (2) darstellt;
Aufwickeln (150) einer inneren Lage (F2i) als radiale Wicklung der Druckbehälterverstärkungsschicht (32) auf das Mittelteil (21) und direkt auf die Außenkontur (5a) im Randbereich (25), vorzugsweise bis zu einer Anschlagnase (57) der Vorform (5) als Begrenzung der mit der Druckbehälterverstärkungsschicht (22) zu überwickelnden Außenkontur (5a) im Randbereich (25) der Polkappe (22);
nachfolgendes Aufwickeln (130) ein oder mehrerer äußerer Lagen (F2a) der Druckbehälterverstärkungsschicht (32) auf die gesamte Vorform (5).

## Claims

1. A pressure vessel (1) comprising an inner container (2) made up of a cylindrical middle part (21) and two dome-shaped pole caps (22) closing both sides of the middle part (21) and an outer layer (3) wrapped onto the inner container (2) for reinforcement of the inner container (2) against a pressure load, wherein the outer layer (3) comprises at least a pole cap reinforcement layer (31) and a pressure vessel reinforcement layer (32) made of fiber composite material (FCM), wherein the pole cap reinforcement layer (31) at least partially overlaps the pole caps (22) and the pressure vessel reinforcement layer (32) overlaps the pole caps (22) and the middle part (21) and a contour-stable preform (5, 51, 53) is arranged as the pole cap reinforcement layer (31) on at least one of the pole caps (22), preferentially on both pole caps (22),
**characterized by** the fact
that the contour-stable preform (5, 51) is a contour-stable preform (51) braided from fiber material (F1) with a braid angle (FLW) of the fiber material (F1) on the pole cap edge (25) of at least 140°, preferentially at least 150°, particularly preferentially at least 160°, wherein the braid angle (FLW) designates the angle between the crossing fibers, the bisector of which is aligned essentially parallel to the cylinder axis of the cylindrical central part (21).

2. The pressure vessel (1) according to Claim 1,
**characterized by** the fact
that one or more reinforcement strands (52) essentially aligned parallel to the cylinder axis (Z) of the cylindrical middle part (21) are braided into the braided preform (51).

3. The pressure vessel (1) according to Claim 1,
**characterized by** the fact
that the contour-stable preform (5, 53) consists of fiber material (F1) embroidered onto a drapable backing material (54); the fiber material (F1) is preferably embroidered onto the backing material (54) as a spiral.

4. The pressure vessel (1) according to one of the Claims 3,
**characterized by** the fact
that one or more reinforcement strands (55) aligned essentially parallel to the cylinder axis (Z) of the cylindrical middle part (21) are also embroidered onto the backing material (54).

5. The pressure vessel (1) according to one of the Claims 3 or 4,
**characterized by** the fact
that the backing material (54) is fastened directly to the pole cap with an adhesive layer (56).

6. The pressure vessel (1) according to one of the Claims 1 to 4,
**characterized by** the fact
that the preform (5, 51, 53) is slid over at least one part of the still-wet fiber composite material (F2) of the pressure vessel reinforcement layer (32) wrapped over the pole cap (22) and is fastened by the matrix material of the pressure vessel reinforcement layer (32) in the area of the pole cap (22).

7. The pressure vessel (1) according to Claim 1 to 5,
**characterized by** the fact
that the pressure vessel reinforcement layer (32) overlaps the pole cap reinforcement layer (31) and the preform (5, 51, 53) is fastened to the pole cap (22) to create contour stability; the preform (5, 51, 53) is preferably made with a thermoplastic matrix and is welded at least at certain points to the pole cap (22) made of a plastic material.

8. The pressure vessel (1) according to one of the Claims above,
**characterized by** the fact
that the preform (5) is a hardened preform for application to the pole cap, wherein an inner contour (5i) of the preform (5) is adapted to the pole cap (22) and an outer contour (5a) of the preform (5) is formed in such a way that the pressure vessel reinforcement layer (32) can be applied to it, wherein the outer contour (5a) is designed in such a way that in the edge area (25) of the pole cap (22) it forms an extension of the middle part (21) of the inner container (2), wherein the pressure vessel reinforcement layer (32) furthermore comprises a radially wrapped inner layer (F2i) which is wound as a continuous layer onto the middle part (21) and directly onto the outer contour (5a) in the edge area (25) for subsequent overwrapping of the entire preform (5) with one or more external layers (F2a) of the pressure vessel reinforcement layer (32), the preform (5) preferably comprises a stop lug (57) as delimitation of the outer contour (5a) overwrapped with the pressure vessel reinforcement layer (22) in the edge area (25) of the pole cap (22).

9. A procedure (100) for producing a pressure vessel (1) according to Claim 1 comprising the steps
Production (110) of a contour-stable preform (5, 51, 53) as the pole cap reinforcement layer (31) for at least one of the pole caps (22), preferably for both pole caps (22), by means of a braiding process (112) or by means of embroidering (116) fiber material onto a drapable backing material (54); Application (120) of the pole cap reinforcement layer (31) to the pole caps (22) so that the pole cap reinforcement layer (31) at least partially overlaps the pole caps (22);
Application (130) of the pressure vessel reinforcement layer (32) to the pole caps (22) and the middle part (21), wherein the pressure vessel reinforcement layer (32) is preferably applied to the pole cap reinforcement layer (22) from the outside.

10. The procedure according to Claim 9, wherein the braiding comprises the further step of additional braiding (114) of one or more reinforcement strands (52) aligned essentially parallel to the cylinder axis (Z) of the cylindrical middle part (21).

11. The procedure according to Claim 10, wherein the step of producing (110) the contour-stable preform (5, 53) by means of embroidery (116) comprises spiral embroidering of the fiber material onto the backing material (54); preferably, one or more reinforcement strands (55) are embroidered onto the backing material (54) with an alignment essentially parallel to the cylinder axis (Z) of the cylindrical middle part (21).

12. The procedure according to one of Claims 9 to 11, comprising the additional step of welding (118), at least at certain points, of the preform (5, 51, 53) produced with a thermoplastic matrix to the pole cap (22) to fasten the preform (5, 51, 53) to the pole cap (22).

13. The procedure according to one of the Claims 9 to 12, comprising the additional steps of
Hardening (140) of the preform (5) with an inner contour (5i) adapted to the pole cap (22) and an outer contour (5a) formed in such a way that the pressure vessel reinforcement layer (32) can be applied to it, wherein the outer contour (5a) is executed in such a way that in the edge area (25) of the pole cap (22) it forms an extension of the middle part (21) of the inner container (2);
Winding (150) of an inner layer (F2i) as a radial winding of the pressure vessel reinforcement layer (32) onto the middle part (21) and directly onto the outer contour (5a) in the edge area (25), preferably up to a stop lug (57) of the preform (5) as a delimitation of the outer contour (5a) to be wrapped with the pressure vessel reinforcement layer (22) in the edge region (25) of the pole cap (22);
Subsequent winding (130) of one or more outer layers (F2a) of the pressure vessel reinforcement layer (32) onto the entire preform (5).

## Revendications

1. Réservoir de pression (1) comprenant un réservoir intérieur (2), composé d'une partie centrale cylindrique (21) et de deux calottes d'extrémité (22) de forme conique fermant la partie centrale (21) respectivement sur les deux côtés, et une couche extérieure (3) enroulée sur le réservoir intérieur (2) afin de renforcer le réservoir intérieur (2) contre une contrainte de pression, dans lequel la couche extérieure (3) comprend au moins une couche de renforcement de la calotte d'extrémité (31) et une couche de renforcement du réservoir de pression (32) composée de matériau composite renforcé de fibres (FVM), la couche de renforcement de la calotte d'extrémité (31) recouvrant au moins partiellement les calottes d'extrémité (22) et la couche de renforcement du réservoir de pression (32) recouvrant les calottes d'extrémité (22) et la partie centrale (21), et une préforme aux contours stables (5, 51, 53) étant disposée en tant que couche de renforcement de la calotte d'extrémité (31) sur au moins une des calottes d'extrémité (22), de préférence sur les deux calottes d'extrémité (22),
**caractérisé en ce que**
la préforme aux contours stables (5, 51) est une préforme aux contours stables (51) tressée en matériau de fibre (F1) selon un angle de torsion (FLW) du matériau de fibre (F1) au niveau de la bordure de calotte d'extrémité (25) au moins égal à 140°, de préférence au moins égal à 150°, de façon particulièrement préférée au moins égal à 160°, l'angle de torsion (FLW) correspondant à l'angle entre les fibres qui se croisent et dont la bissectrice est essentiellement parallèle à l'axe de cylindre de la partie centrale cylindrique (21).

2. Réservoir de pression (1) selon la revendication 1,
**caractérisé en ce que**
dans la préforme tressée (51) sont entrelacés un ou plusieurs fils de renforcement (52) selon une orientation essentiellement parallèle à l'axe de cylindre (Z) de la partie centrale cylindrique (21).

3. Réservoir de pression (1) selon la revendication 1,
**caractérisé en ce que**
la préforme aux contours stables (5, 53) se compose d'un matériau de fibre (F1) brodé sur un matériau de support (54) drapable, et de préférence, le matériau de fibre (F1) est brodé en spirale sur le matériau de support (54).

4. Réservoir de pression (1) selon la revendication 3,
**caractérisé en ce que**
un ou plusieurs fils de renforcement (55) sont brodés sur le matériau de support (54) selon une orientation essentiellement parallèle à l'axe de cylindre (Z) de la partie centrale cylindrique (21).

5. Réservoir de pression (1) selon l'une des revendications 3 ou 4,
**caractérisé en ce que**
le matériau de support (54) est fixé directement sur la calotte d'extrémité par une couche adhésive (56).

6. Réservoir de pression (1) selon l'une des revendications 1 à 4,
**caractérisé en ce que**
la préforme (5, 51, 53) est poussée sur au moins une partie du matériau composite renforcé de fibres (F2), enroulé encore mouillé sur la calotte d'extrémité (22), de la couche de renforcement du réservoir de pression (32) et est fixée dans la zone de la calotte d'extrémité (22) via le matériau de matrice de la couche de renforcement du réservoir de pression (32).

7. Réservoir de pression (1) selon l'une des revendications 1 à 5,
**caractérisé en ce que**
la couche de renforcement du réservoir de pression (32) recouvre la couche de renforcement de la calotte d'extrémité (31), et la préforme (5, 51, 53) est fixée sur la calotte d'extrémité (22) pour réaliser la stabilité de contour, la préforme (5, 51, 53) étant de préférence fabriquée avec une matrice thermoplastique et étant soudée, au moins par points, à la calotte d'extrémité (22) en utilisant un matériau de plastique.

8. Réservoir de pression (1) selon l'une des revendications précédentes, **caractérisé en ce que**
la préforme (5) est une préforme durcie à appliquer sur la calotte d'extrémité, un contour intérieur (5i) de la préforme (5) étant adapté sur la calotte d'extrémité (22) et un contour extérieur (5a) de la préforme (5) étant réalisé de façon telle que la couche de renforcement du réservoir de pression (32) peut être déposée dessus, le contour extérieur (5a) étant à cet effet conçu de façon telle qu'il représente, dans la zone de bordure (25) de la calotte d'extrémité (22), un prolongement de la partie centrale (21) du réservoir intérieur (2), la couche de renforcement du réservoir de pression (32) comprenant de plus une couche intérieure (F2i) enroulée radialement, qui est enroulée en tant que couche continue sur la partie centrale (21) et directement sur le contour extérieur (5a) dans la zone de bordure (25) pour le recouvrement suivant de l'ensemble de la préforme (5) avec une ou plusieurs couches extérieures (F2a) de la couche de renforcement du réservoir de pression (32), la préforme (5) comprenant de préférence un nez de butée (57) comme délimitation du contour extérieur (5a) recouvert de la couche de renforcement du réservoir de pression (22) au niveau de la zone de bordure (25) de la calotte d'extrémité (22).

9. Procédé (100) de fabrication d'un réservoir de pression (1) selon la revendication 1, comprenant les étapes suivantes :
fabrication (110) d'une préforme aux contours stables (5, 51, 53) en tant que couche de renforcement de la calotte d'extrémité (31) pour au moins une des calottes d'extrémité (22), de préférence pour les deux calottes
d'extrémité (22), au moyen d'un procédé de tressage (112) ou au moyen d'une broderie (116) d'un matériau de fibre sur un matériau de support drapable (54) ;
application (120) de la couche de renforcement de la calotte d'extrémité (31) sur les calottes d'extrémité (22) de façon à ce que la couche de renforcement de la calotte d'extrémité (31) recouvre au moins partiellement les calottes d'extrémité (22) ;
application (130) de la couche de renforcement du réservoir de pression (32) sur les calottes d'extrémité (22) et la partie centrale (21), la couche de renforcement du réservoir de pression (32) étant de préférence appliquée depuis l'extérieur sur la couche de renforcement de la calotte d'extrémité (22).

10. Procédé selon la revendication 9, dans lequel le tressage comprend l'étape supplémentaire d'entrelacement supplémentaire (114) d'un ou de plusieurs fils de renforcement (52) selon une orientation essentiellement parallèle à l'axe de cylindre (Z) de la partie centrale cylindrique (21).

11. Procédé selon la revendication 10, dans lequel l'étape de fabrication (110) de la préforme aux contours stables (5, 53) au moyen d'une broderie (116) comporte une broderie en spirale du matériau de fibre sur le matériau de support (54), un ou plusieurs fils de renforcement (55) étant de préférence brodés sur le matériau de support (54) selon une orientation essentiellement parallèle à l'axe de cylindre (Z) de la partie centrale cylindrique (21).

12. Procédé selon l'une des revendications 9 à 11, comprenant l'étape supplémentaire de soudage (118), au moins par points, de la préforme (5, 51, 53) fabriquée avec une matrice thermoplastique à la calotte d'extrémité (22) afin de fixer la préforme (5, 51, 53) sur la calotte d'extrémité (22).

13. Procédé selon l'une des revendications 9 à 12, comprenant les étapes supplémentaires suivantes :
durcissement (140) de la préforme (5) présentant un contour intérieur (5i) adapté à la calotte d'extrémité (22) et un contour extérieur (5a) qui est réalisé de façon telle que la couche de renforcement du réservoir de pression (32) peut être déposée dessus, le contour extérieur (5a) étant à cet effet conçu de façon telle qu'il représente, dans la zone de bordure (25) de la calotte d'extrémité (22), un prolongement de la partie centrale (21) du réservoir intérieur (2) ;
enroulement (150) d'une couche intérieure (F2i) en tant qu'enroulement radial de la couche de renforcement du réservoir de pression (32) sur la partie centrale (21) et directement sur le contour extérieur (5a) au niveau de la zone de bordure (25), de préférence jusqu'à un nez de butée (57) de la préforme (5) en tant que délimitation du contour extérieur (5a) à recouvrir de la couche de renforcement du réservoir de pression (22) au niveau de la zone de bordure (25) de la calotte d'extrémité (22) ;
enroulement suivant (130) d'une ou de plusieurs couches extérieures (F2a) de la couche de renforcement du réservoir de pression (32) sur l'ensemble de la préforme (5).
